# EUROPÄISCHE PATENTSCHRIFT

(11) **EP 3 202 529 B1**
(45) Veröffentlichungstag und Bekanntmachung des Hinweises auf die Patenterteilung: **22.11.2023**
(21) Anmeldenummer: 16204238.6
(22) Anmeldetag: 15.12.2016
(51) Int. Cl.: B23K 20/02, B23P 6/00, F01D 5/00, B23K 20/233, F01D 9/04, B23K 31/02, B23K 1/00, G01B 11/28, F01D 5/14

(54) **REPARATURVERFAHREN FÜR TURBINENLEITSCHAUFELN, REPARIERTE TURBINENLEITSCHAUFEL UND REPARATURSYSTEM ZUR REPARATUR VON TURBINENLEITSCHAUFELN**
REPAIR METHOD FOR TURBINE VANES, REPAIRED TURBINE VANE AND REPAIR SYSTEM FOR REPAIRING TURBINE VANES
PROCÉDÉ DE RÉPARATION D'AUBES STATORIQUES DE TURBINE, AUBE STATORIQUE DE TURBINE REPARÉE ET SYSTÈME DE RÉPARATION D'AUBES STATORIQUES DE TURBINE

(30) Priorität: 05.02.2016 DE 102016201764
(43) Veröffentlichungstag der Anmeldung: 09.08.2017
(73) Patentinhaber: MTU Aero Engines AG, 80995 München (DE)
(72) Erfinder: Aschermann, Lars, 31226 Peine (DE); Mania, Bastian, 30163 Hannover (DE); Minso, Alexandre, 30625 Hannover (DE); Seidel, Frank, 30938 Grossburgwedel (DE); Wagner, Matthias, 21244 Buchholz-Trelde (DE)

(56) Entgegenhaltungen:
- EP-A1- 1 348 833
- EP-A2- 1 207 004
- EP-A2- 2 623 720
- US-A- 5 285 572
- US-A1- 2006 078 422
- US-A1- 2007 251 072
- BREMER C: "KOMPRESSOR-UND TURBINENSCHAUFELN AUTOMATISCH REPARIEREN", WERKSTATT + BETRIEB, CARL HANSER VERLAG, MÜNCHEN DE, Bd. 129, Nr. 7/08, 1. August 1996 (1996-08-01), Seiten 672-674, XP000678763, ISSN: 0043-2792

## Beschreibung

Die vorliegende Erfindung betrifft ein Reparaturverfahren für Leitschaufeln einer Gasturbine, insbesondere einer Fluggasturbine.

Turbinenschaufeln unterliegen im Betrieb von Gasturbinen, insbesondere Fluggasturbinen, hohen Belastungen. Diese Belastungen führen zu dreidimensionalen Formabweichungen an den Turbinenschaufeln sowie zu Beschädigungen, was eine regelmäßige Wartung bzw. Reparatur erforderlich macht. Dabei werden Beschädigungen durch Löten oder Schweißen repariert, wobei anschließend in manueller Arbeit (Schleifen) ein Abtragen von zu viel aufgetragenem Material erfolgt, um die Turbinenschaufel wieder in eine einsatzbereite Form zu bringen. Das manuelle Abtragen von Material führt allerdings dazu, dass die reparierten Turbinenschaufeln nicht eine für den Betrieb optimale Form bzw. Kontur aufweisen, was sich insbesondere in dem relevanten Bereich des A4-Querschnitts besonders negativ auswirkt, so dass Leistungsverluste der Gasturbine daraus resultieren. In der Konsequenz ergeben sich erhöhte Kraftstoffverbräuche und CO2 Emissionen sowie verminderte Laufzeiten durch erhöhten Verschleiß der Turbinen bis zur nächsten notwendigen Generalüberholung.

Aus der EP 2 623 720 A2 ist ein Verfahren gemäß dem Oberbegriff des Anspruchs 1, eine Leitschaufel gemäß dem Oberbegriff des Anspruchs 10, und ein Reparatursystem gemäß dem Oberbegriff des Anspruchs 12 bekannt, bei denen zwischen zwei benachbarten Leitschaufeln Lötvorformen angeordnet und mit einem jeweiligen Fußbereich der benachbarten Leitschaufeln materialschlüssig verbunden werden durch Löten und anschießenden Materialabtrag an den Lötnähten.

Aus der EP 1 207 004 A2 ist ein Verfahren zur Instandsetzung von Turbomaschinenschaufeln bekannt, bei dem in einem Teilbereich Material abgetragen und durch neues ersetzt wird.

Aus der US 2007/0251072 A1 ist ein Verfahren zur Reparatur von Laufschaufelspitzen bekannt, bei dem die Laufschaufeln optisch vermessen werden, um zu viel auf die Laufschaufelspitze aufgetragenes Material wieder abtragen zu können.

Aufgabe der Erfindung ist es, ein Verfahren vorzuschlagen, bei dem die obigen Nachteile verringert oder gar vermieden werden können.

Zur Lösung dieser Aufgabe wird ein Verfahren gemäß Anspruch 1 vorgeschlagen, das die folgenden Schritte umfasst:
Bereitstellen von wenigstens einer zu wartenden Leitschaufel;
Erfassen der Ist-Geometrie der zu wartenden Leitschaufel unter Anwendung von wenigstens einem Messverfahren;
Vergleichen der durch das berührungslose Messverfahren erfassten Ist-Geometrie mit einer vorbestimmten Soll-Geometrie für einen entsprechenden Leitschaufeltyp;
Berechnung einer Zielgeometrie für die zu wartende Leitschaufel, die soweit möglich der Soll-Geometrie entspricht, derart dass unter Verwendung von Optimierungsparametern die Soll-Geometrie der zu wartenden Leitschaufel wenigstens abschnittsweise entlang ihrer Strömungskontur angenähert wird;
Aufbringen und maschinelles Abtragen von Material an der zu wartenden Leitschaufel, derart dass die berechnete Zielgeometrie hergestellt wird.

Bei dem vorgeschlagenen Verfahren soll das Abtragen von Material automatisiert bzw. maschinell erfolgen unter Bezugnahme auf die berechneten Optimierungsparameter. Hierdurch kann gewährleistet werden, dass der Materialabtrag insbesondere in besonders relevanten Bereichen einer Strömungskontur der Leitschaufel und vorzugsweise auch wiederholt für verschiedene Leitschaufeln, so exakt erfolgen kann, dass die Strömungskontur möglichst optimal ausgebildet werden kann für die weitere Verwendung der reparierten Leitschaufel im Betrieb einer Gasturbine, insbesondere Fluggasturbine.

Erfindungsgemäß wird die Ziel-Geometrie der zu wartenden Leitschaufel so berechnet und wiederhergestellt wird, dass insbesondere die Strömungskontur im Bereich des A4-Querschnitts der zu wartenden Leitschaufel der Strömungskontur der Soll-Geometrie im Bereich des A4-Querschnitts möglichst gut angenähert wird. Die Ziel-Geometrie der zu wartenden Leitschaufel soll also in dem Bereich ihrer Strömungskontur wiederhergestellt werden, der mit der Strömungskontur einer benachbarten Leitschaufel den A4-Querschnitt bildet. Der A4-Querschnitt liegt dabei etwa entlang einer Verbindungslinie zwischen einem Hinterkantenbereich einer Druckseite der einen Leitschaufel und einem zentralen Bereich einer Saugseite der anderen Leitschaufel. Der A4-Querschnitt bezieht sich auf den engsten Querschnitt im Triebwerk, der sich üblicherweise in der ersten Turbinenstufe hinter der Brennkammer befindet. Speziell in diesem Bereich ist es besonders relevant, dass der Abstand zwischen den benachbarten Leitschaufeln, insbesondere der Abstand zwischen der Saugseite der einen Leitschaufel und der Druckseite der anderen Leitschaufel optimal eingestellt ist. Eine Vergrößerung dieses Abstandes führt zu verschlechterten Strömungsverhältnissen und somit einem schlechteren Wirkungsgrad der Gasturbine.

Erfindungsgemäß erfolgt das Auftragen und Abtragen von Material entlang einer Saugseite der Strömungskontur der Leitschaufel von einer Vorderkante bis zu einer Hinterkante der Leitschaufel. Das Abtragen von Material kann durch automatisiertes Fräsen oder/und Schleifen oder/und durch ein sonstiges automatisiertes spanendes Verfahren durchgeführt werden.

Weiterbildend wird vorgeschlagen, dass das Aufbringen von Material durch Löten, insbesondere Diffusionslöten erfolgt.

Das Auftragen von Material kann automatisiert oder/und manuell erfolgen. Beim Auftragen von Material kommt es nicht auf eine absolut exakte Menge von Material an, die aufgetragen wird, vielmehr muss sichergestellt werden, dass die Verbindung zwischen dem aufgetragenen Material und dem Grundkörper der Leitschaufel optimal hergestellt ist, so dass dann das überschüssige Material automatisiert abgetragen werden kann, um die optimale Strömungskontur wieder herzustellen.

Ferner kann das Aufbringen von Material in Abhängigkeit von der erfassten Ist-Geometrie und von der Soll-Geometrie durchgeführt werden. Dabei können berechnete Daten für das Aufbringen von Material einer automatisierten Löt- oder Schweißeinrichtung zugeführt werden, die dann aufgrund dieser Daten, entsprechende Materialmengen an den entsprechenden Stellen der Leitschaufel aufbringt. Bei einer manuellen Bearbeitung können Stellen und aufzutragende Materialmengen beispielsweise in Form einer Zeichnung auf Papier oder dargestellt auf einem Bildschirm einer Person zur Verfügung gestellt, werden, die den Materialauftrag manuell durchführt.

Bevorzugt wird nach dem Auftragen von Material auf die Leitschaufel ein weiteres Einmessen, insbesondere als automatisiertes Messverfahren, durchgeführt, um die Leitschaufel für das Abtragen des Materials zu positionieren. Bei diesem Einmessen kann insbesondere sichergestellt werden, dass die zu reparierende Leitschaufel in einer Referenzposition angeordnet ist bezogen auf ein räumliches Koordinatensystem, das für das automatisierte Abtragen von Material verwendet wird. Diese Referenzposition kann beispielsweise die gleiche Ausrichtung bzw. Lage der Leitschaufel im Raum sein, wie bei der Erfassung der Ist-Geometrie vor dem Schritt des Materialauftragens.

Es wird vorgeschlagen, dass die Soll-Geometrie eine Annäherung an eine Ursprungsgeometrie oder die Ursprungsgeometrie der Leitschaufel ist. Hierbei ist es bevorzugt, dass die Soll-Geometrie als Annäherung an die Ursprungsgeometrie durch eine Vermessung bestimmt wird, die an einer neuwertigen Leitschaufel durchgeführt wird. Alternativ kann die Soll-Geometrie als Ursprungsgeometrie aus Konstruktionsdaten einer Leitschaufel abgeleitet werden. Ferner ist es auch möglich, Konstruktionsdaten zu verwenden, die aus einer Neuentwicklung einer Leitschaufel stammen.

Durch die vorgeschlagenen Verfahren zur Erfassung der Soll-Geometrie können zum einen Leitschaufeln repariert werden, die von einem Hersteller stammen, auf dessen Konstruktionsdaten nicht zurückgegriffen werden kann. Eine solche Leitschaufel kann dann beispielsweise mittels eines dreidimensionalen Scannings (Laserscanning oder dergleichen) oder anderen bildgebenden Verfahren mit ihren Außenkonturen erfasst werden, um hieraus eine Soll-Geometrie zu bestimmen. Zum anderen ist es möglich Leitschaufeln zu reparieren, von denen man ursprüngliche Konstruktionsdaten kennt.

Die bereitgestellte Leitschaufel ist erfindungsgemäß einer Hochdruckturbine, insbesondere der ersten Hochdruckturbinenstufe, die sich direkt an die Brennkammer anschließt, entnommen. Diese Leitschaufeln der ersten Hochdruckturbinenstufe unterliegen in besonderem Maße der Abnutzung bzw. Verformung im Betrieb aufgrund des nach der Brennkammer herrschenden hohen Drucks und der hohen Temperaturen.

Die aufgeführten Verfahrensschritte können wiederholt durchgeführt werden bis alle Leitschaufeln eines Leitschaufelrings einer Turbinenstufe, insbesondere Hochdruckturbinenstufe repariert sind.

Die Erfindung betrifft ferner auch eine Leitschaufel gemäß Anspruch 10.

Schließlich betrifft die Erfindung auch ein Reparatursystem gemäß Anspruch 12.

Ein solches Reparatursystem kann beispielsweise durch verschiedene Arbeitsplätze bzw. Maschineneinheiten gebildet werden, an denen die verschiedenen Verfahrensschritte durchgeführt werden und denen eine zu reparierende Leitschaufel sequentiell zugeführt wird.

Nachfolgend wird die Erfindung unter Bezugnahme auf die anliegenden Figuren beispielhaft und nicht einschränkend beschrieben.
Fig. 1 zeigt eine vereinfachte schematische Querschnittsdarstellung von zwei Leitschaufeln eines Leitschaufelrings, wobei die Leitschaufeln eine ursprüngliche Strömungskontur aufweisen.
Fig. 2 zeigt eine vereinfachte schematische Querschnittsdarstellung von zwei Leitschaufeln eines Leitschaufelrings, wobei die Leitschaufeln eine abgenutzte Strömungskontur aufweisen.
Fig. 3 zeigt anhand von vereinfachten schematischen Querschnittsdarstellungen die Schritte eines Verfahrens zum Reparieren von zu reparierenden Leitschaufeln aus Fig. 2.
Fig. 4 zeigt eine vereinfachte schematische Querschnittsdarstellung von zwei Leitschaufeln eines Leitschaufelrings, wobei die Leitschaufeln repariert sind und eine Strömungskontur aufweisen, die einer optimierten Ziel-Geometrie entspricht.

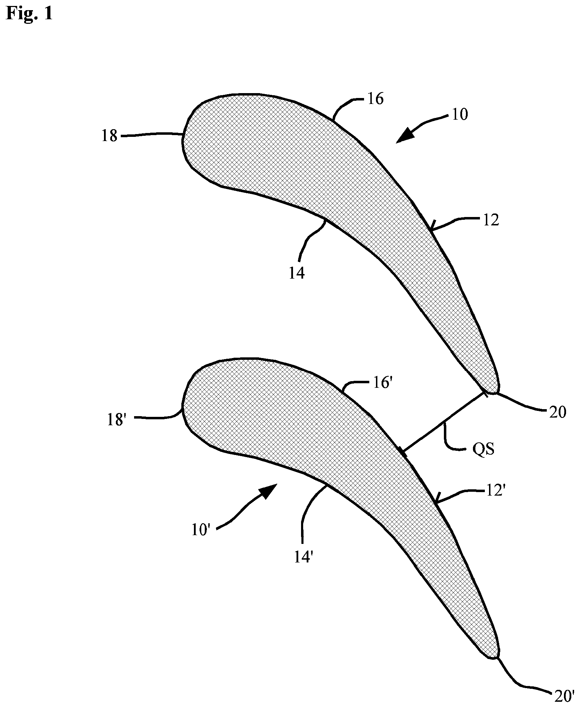

In Fig. 1 sind beispielhaft zwei in Umfangsrichtung UR einer Turbinenstufe angeordnete Turbinenschaufeln 10 und 10' dargestellt. Die Turbinenschaufeln können Teil eines Leitschaufelrings sein und als Leitschaufeln 10, 10' ausgebildet sein. Die Leitschaufeln 10, 10' sind in der Fig. 1 und auch in den nachfolgenden Figuren als vereinfachte schematische Querschnitte dargestellt. Beide Leitschaufeln 10, 10' weisen eine Strömungskontur 12, 12' auf, mit einer Druckseite 14, 14' und einer Saugseite 16, 16'. Die Druckseiten 14, 14' und die entsprechenden Saugseiten 16, 16' sind jeweils durch eine Vorderkante 18, 18' und eine Hinterkante 20, 20' miteinander verbunden.

Bei der in der Fig. 1 dargestellten Situation von zwei benachbarten Leitschaufeln 10, 10' eines Leitschaufelrings einer Gasturbine wird zwischen allen benachbarten Leitschaufeln jeweils der sogenannte A4-Querschnitt gebildet. Dieser A4-Querschnitt kann auch als Abstand zwischen zwei benachbarten Leitschaufeln 10, 10' bezeichnet werden, der in einem bestimmen Bereich gemessen wird. Wie aus der Fig. 1 ersichtlich, wird der A4-Querschnitt QS zwischen der Druckseite 14 der Leitschaufel 10 und der Saugseite 16' der Leitschaufel 10' gemessen. Dabei erstreckt sich die A4-Querschnittslinie QS von einem hinteren Bereich der Leitschaufeln 10, etwa im Bereich der Hinterkante 20, zu einem mittleren Bereich der Saugseite 16' der Leitschaufel 10'. Dieser A4-Querschnitt stellt eine für die Strömungsverhältnisse in der Turbinenstufe herrschenden Strömungsverhältnisse eine wichtige Größe dar. Abweichungen von diesem A4-Querschnitt führen zu veränderten Strömungsverhältnissen und können den Wirkungsgrad der Gasturbine negativ beeinflussen.

In Fig. 1 sind mit der gekreuzten Schraffur zwei Leitschaufeln 10, 10' dargestellt, deren Strömungskontur 12, 12' in einem ursprünglichen Zustand dargestellt ist. Man kann auch sagen, dass die beiden Leitschaufeln 10, 10' neuwertig sind. Der A4-Querschnitt QS bzw. der entsprechende Abstand zwischen den beiden Leitschaufeln ist aufgrund der Neuwertigkeit der Leitschaufeln 10, 10' ebenfalls in einem ursprünglichen Maß, so dass ein optimaler Betrieb möglich ist.

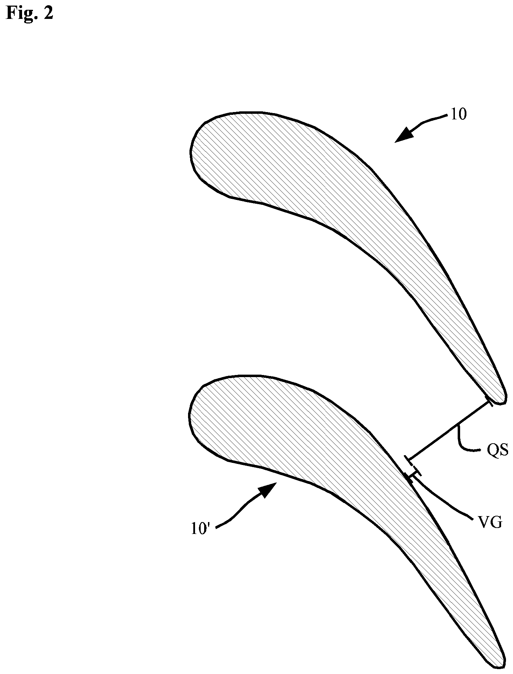

Nach einer bestimmten Anzahl von Betriebsstunden ergeben sich an den Leitschaufeln 10, 10' Veränderungen an der Strömungskontur 12, 12' aufgrund der hohen Temperaturen und des hohen Drucks des durchströmenden Heißgases. Beispielsweise wird auch an der Saugseite 16, 16' Material sukzessive weg erodiert oder es treten auch andere Beschädigungen wie Risse oder Löcher auf. Durch derartigen Verschleiß der Leitschaufeln 10, 10' verändert sich der A4-Querschnitt QS, wobei er um einen Betrag VG vergrößert wird. Der A4-Querschnitt beträgt also in dem in Fig. 2 dargestellten Zustand QS plus VG, so dass der Strömungsquerschnitt zwischen den beiden Leitschaufeln 10, 10' vergrößert ist, was sich nachteilig auf die Strömungsverhältnisse und den Wirkungsgrad der Gasturbine auswirkt. Bauteile, bei denen derartige Abnutzungen auftreten, müssen für den weiteren Betrieb entsprechend wieder Instand gesetzt bzw. repariert werden.

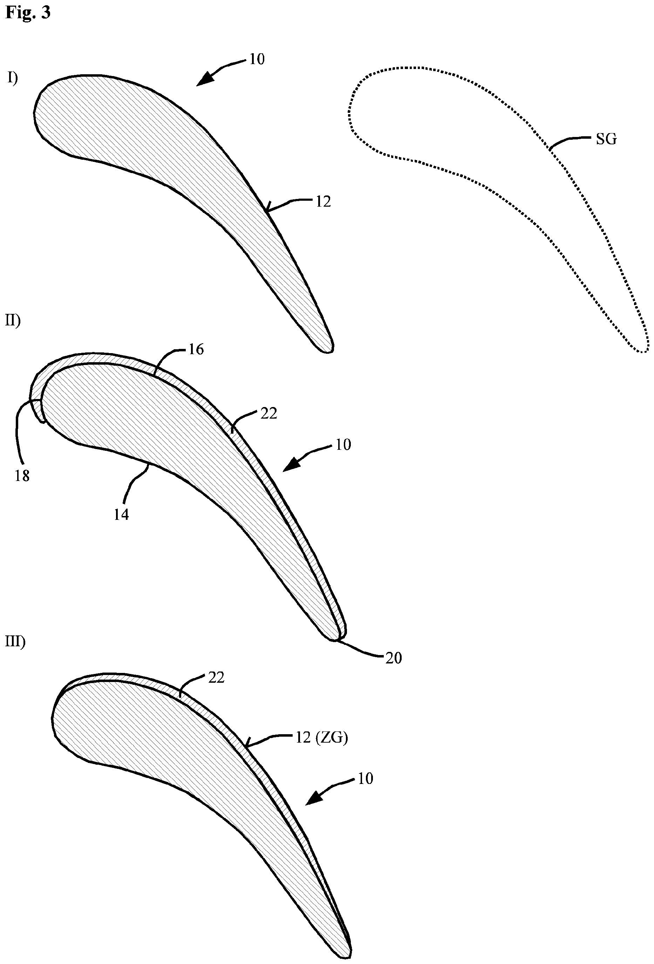

Hierzu kann ein Verfahren zum Einsatz kommen, das nachfolgend anhand der Fig. 3 erläutert wird. Die nachfolgende Beschreibung nennt jeweils beispielhaft nur die Leitschaufel 10, auch wenn das Verfahren für die benachbarte Leitschaufel 10' und weitere Leitschaufeln ebenfalls durchgeführt werden kann. Die Leitschaufel 10 bzw. alle Leitschaufeln einer Turbinenstufe wird zunächst bereitgestellt. Je nach Bauweise einer Turbinenstufe können die Leitschaufeln einzeln bereitgestellt werden, oder mehrere Leitschaufeln können Teil eines Leitschaufelsegments sein, das mehrere insbesondere einstückig miteinander verbundene Leitschaufeln aufweist.

Eine Ist-Geometrie der abgenutzten Leitschaufel 10, die in Fig. 3 oben links dargestellt ist, wird zunächst mittels eines berührungslosen Verfahrens, insbesondere eines optischen Verfahrens erfasst (I). Hier können insbesondere Verfahren wie berührungslose 3D-Scanner oder ähnliches zum Einsatz kommen. Diese Ist-Geometrie, die in der vorliegenden Anmeldung durch die Strömungskontur 12 repräsentiert wird, wird mit einer Soll-Geometrie verglichen. Die Soll-Geometrie SG ist in Fig. 3 oben rechts als punktierte Strömungskontur vereinfacht und schematisch angedeutet. Aus dem Vergleich zwischen der Ist-Geometrie und der Soll-Geometrie SG können mittels Optimierungsparametern Ziel-Geometrien berechnet werden, die die Strömungskontur im Bereich des A4-Querschnitts bestmöglich an die Soll-Geometrie annähern.

In einem nächsten Schritt (II) wird Material 22 auf die Leitschaufel 10 aufgetragen. Im vorliegenden Beispiel ist ein Auftrag von Material 22 von der Vorderkante 18 zur Hinterkante 20 entlang der Saugseite 16 dargestellt. Selbstverständlich kann Material 22 gegebenenfalls auch auf der Druckseite 14 aufgebracht werden, auch wenn dies im vorliegenden Beispiel nicht explizit beschrieben wird. Das Auftragen von Material 22 erfolgt insbesondere durch Löten oder Schweißen, vorzugsweise durch Diffusionslöten, um eine optimale Verbindung zwischen dem Auftragsmaterial 22 und der Instand zu setzenden Leitschaufel 10 zu gewährleisten. Das Auftragen von Material 22 kann manuell oder/und automatisiert erfolgen. Die Menge oder/und die Positionen entlang der Leitschaufel bzw. der Strömungskontur 12 können beispielsweise auf Grundlage der Optimierungsparameter festgelegt werden, die zuvor aufgrund des Vergleichs von Ist-Geometrie und Soll-Geometrie ermittelt worden sind.

Nach dem Auftragen von Material 22 wird die Strömungskontur 12 (Ziel-Geometrie ZG) der zu reparierenden Leitschaufel 10 wiederhergestellt durch automatisiertes Abtragen von überschüssigem Material 22 (siehe III). Die Leitschaufel 10 wird hierzu in eine Referenzposition relativ zu einer Bearbeitungseinheit gebracht. Die Bearbeitungseinheit ist dabei dazu eingerichtet auf Grundlage der Optimierungsparameter bzw. Daten über die zu erreichende Ziel-Geometrie einen exakten Abtrag von Material 22 durchzuführen. Das Abtragen von Material 22 erfolgt dabei vorzugsweise durch Schleifen oder Fräsen. Nach dem spanenden Abtrag von überschüssigem Material 22 weist die Leitschaufel 10 eine Strömungskontur 12 auf, die im Wesentlichen wieder der Soll-Geometrie entspricht, wobei die Leitschaufel 10 einen Teil aus ursprünglichem Material enthält und einen Teil aus zusätzlich aufgetragenem Material 22.

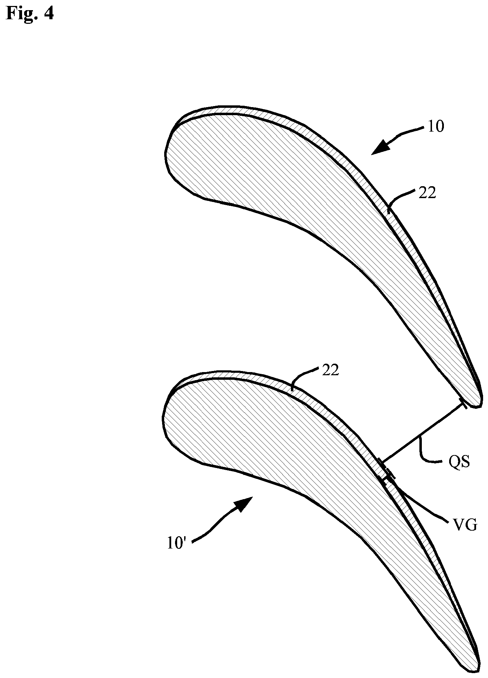

Betrachtet man nach einem solchen weitgehend automatisiert durchgeführten Reparaturverfahren zwei benachbarte reparierte Leitschaufeln 10, 10', wie dies in Fig. 4 dargestellt ist, wird ersichtlich, dass der A4-Querschnitt QS im Wesentlichen wieder dem ursprünglichen A4-Querschnitt QS und der ursprünglichen Strömungskontur (Fig. 1) entspricht. Somit wurde die Vergrößerung VG des Strömungsquerschnitts (Fig. 2) durch das Auftragen von Material 22 in den entsprechenden Bereichen der Leitschaufeln 10, 10' aufgehoben, so dass mit den reparierten Leitschaufeln 10, 10' wieder ein optimaler Betrieb der Gasturbine möglich ist.

Es ist zu beachten, dass auf Grundlage der Erfassung der Ist-Geometrie für jede Leitschaufel individuelle Optimierungsparameter berechnet werden können, die davon abhängen, in welchem Abnutzungszustand die entsprechende Leitschaufel zur Instandhaltung gelangt ist. Da die weiteren Schritte der Reparatur vorzugsweise von der Ist-Geometrie abhängig gemacht werden können, kann gewährleistet werden, dass für jede Leitschaufel der erforderliche Materialauftrag und ein automatisierter Materialabtrag optimiert erfolgen kann, und die Ziel-Geometrie für jede Leitschaufel wieder hergestellt werden kann. Die automatisierte Bearbeitung führt auch zu einem insgesamt verbesserten Ergebnis für alle reparierten bzw. Instand gesetzten Leitschaufeln, wenn reparierte Leitschaufeln untereinander verglichen werden, da für alle Leitschaufeln annähernd dieselbe Ziel-Geometrie wieder hergestellt wird und alle Leitschaufeln aufgrund von berechneten Optimierungsparametern weitgehend automatisiert bearbeitet werden können.

Das hier vorgestellte Verfahren kann beispielsweise an verschiedenen Stationen einer Instandhaltungswerkstätte durchgeführt werden. Bei der Durchführung von automatisierten Schritten, wie etwa der Erfassung der Ist-Geometrie, dem Vergleich von Ist-Geometrie und Soll-Geometrie, der Berechnung von Optimierungsparamatern, dem automatisierten Abtragen von aufgetragenem Material, kommt vorzugsweise wenigstens eine Rechnereinheit zum Einsatz, die dazu eingerichtet ist, entsprechende Erfassungsvorrichtungen bzw. Werkzeugvorrichtungen anzusteuern, insbesondere auf Grundlage der erfassten bzw. berechneten Daten zur Ziel-Geometrie.

Daten, welche die Soll-Geometrie einer Leitschaufel repräsentieren, können beispielsweise dadurch erfasst werden, dass die Geometrie einer neuwertigen Leitschaufel von außen mittels entsprechender Erfassungsvorrichtungen erfasst wird, etwa durch berührungsloses 3D-Scanning, insbesondere optischen Erfassungsverfahren. Alternativ können die Daten der Soll-Geometrie auch aus Konstruktionsdaten abgeleitet sein, die für einen bestimmten Leitschaufeltyp vorliegen und welche die Grundlage dafür bilden, eine neuwertige Leitschaufel herzustellen.

### Bezugszeichenliste

- 10: Turbinenschaufel bzw. Leitschaufel
- 12: Strömungskontur
- 14: Druckseite
- 16: Saugseite
- 18: Vorderkante
- 20: Hinterkante
- 22: Material
- QS: A4-Querschnitt
- SG: Soll-Geometrie
- VG: Vergrößerung

## Patentansprüche

1. Reparaturverfahren für Leitschaufeln (10, 10') einer Gasturbine, insbesondere einer Fluggasturbine, umfassend folgende Schritte:
Bereitstellen von wenigstens einer zu wartenden Leitschaufel (10, 10'),
Erfassen der Ist-Geometrie der zu wartenden Leitschaufel (10, 10') unter Anwendung von wenigstens einem berührungslosen Messverfahren;
Vergleichen der durch das berührungslose Messverfahren erfassten Ist-Geometrie der Leitschaufel (10, 10') mit einer vorbestimmten Soll-Geometrie (SG) für einen entsprechenden Leitschaufeltyp;
Berechnung einer Zielgeometrie (ZG) für die zu wartende Leitschaufel (10, 10'), die soweit möglich der Soll-Geometrie (SG) entspricht, derart dass unter Verwendung von Optimierungsparametern die Soll-Geometrie (SG) der zu wartenden Leitschaufel (10, 10') wenigstens abschnittsweise entlang ihrer Strömungskontur angenähert wird;
Aufbringen von Material entlang einer Saugseite (16, 16') der Strömungskontur der Leitschaufel (10, 10') von einer Vorderkante (18, 18') bis zu einer Hinterkante (20, 20') der zu wartenden Leitschaufel (10, 10') und maschinelles Abtragen von aufgebrachtem Material (22) entlang einer Saugseite (16, 16') der Strömungskontur der Leitschaufel (10, 10') von einer Vorderkante (18, 18') bis zu einer Hinterkante (20, 20') der zu wartenden Leitschaufel (10, 10'), derart dass die berechnete Zielgeometrie (ZG) hergestellt wird, **dadurch gekennzeichnet, dass**
die Ziel-Geometrie (ZG) der zu wartenden Leitschaufel (10, 10') so berechnet und wiederhergestellt wird, dass die Strömungskontur im Bereich des A4-Querschnitts (QS) der zu wartenden Leitschaufel (10, 10') der Strömungskontur der Soll-Geometrie (SG) im Bereich des A4-Querschnitts möglichst gut angenähert wird, wobei der A4-Querschnitt (QS) als Abstand von zwei benachbarten Leitschaufeln (10, 10') definiert ist, der sich zwischen einem zentralen Bereich der Saugseite (16') der zu wartenden Leitschaufel (10') und einem Bereich der Hinterkante (20) der benachbarten Leitschaufel (10) erstreckt, und
dass die bereitgestellte Leitschaufel (10, 10') der ersten, sich direkt an die Brennkammer anschließenden Hochdruckturbinenstufe einer Hochdruckturbine entnommen ist.

2. Reparaturverfahren nach Anspruch, wobei das Abtragen von Material (22) durch automatisiertes Fräsen oder/und Schleifen oder/und durch ein sonstiges automatisiertes spanendes Verfahren durchgeführt wird.

3. Reparaturverfahren nach einem der vorhergehenden Ansprüche, wobei das Aufbringen von Material (22) durch Löten, insbesondere Diffusionslöten erfolgt.

4. Reparaturverfahren nach einem der vorhergehenden Ansprüche, wobei das Aufbringen von Material (22) in Abhängigkeit von der erfassten Ist-Geometrie und von der Ziel-Geometrie (ZG) durchgeführt wird.

5. Reparaturverfahren nach einem der vorhergehenden Ansprüche, wobei nach dem Auftragen von Material (22) auf die Leitschaufel (10, 10') ein weiteres Einmessen durchgeführt wird, um die Leitschaufel (10, 10') für das Abtragen des Materials (22) zu positionieren.

6. Reparaturverfahren nach einem der vorhergehenden Ansprüche, wobei die Soll-Geometrie (SG) eine Annäherung an eine Ursprungsgeometrie oder die Ursprungsgeometrie der Leitschaufel ist.

7. Reparaturverfahren nach Anspruch 6, wobei die Soll-Geometrie (SG) als Annäherung an die Ursprungsgeometrie durch ein Messverfahren bestimmt wird, das an einer neuwertigen Leitschaufel durchgeführt wird.

8. Reparaturverfahren nach Anspruch 6, wobei die Soll-Geometrie (SG) als Ursprungsgeometrie aus Konstruktionsdaten einer Leitschaufel abgeleitet wird oder die Soll-Geometrie basierend auf einer neuen Entwicklung definiert wird.

9. Reparaturverfahren nach einem der vorhergehenden Ansprüche, wobei die Verfahrensschritte wiederholt durchgeführt werden bis alle Leitschaufeln (10, 10') eines Leitschaufelrings einer Turbinenstufe, insbesondere Hochdruckturbinenstufe repariert sind.

10. Leitschaufel umfassend wenigstens einen Reparaturbereich, **dadurch gekennzeichnet, dass** der durch das Reparaturverfahren nach einem der vorhergehenden Ansprüche hergestellt worden, wobei die Leitschaufel eine Ziel-Geometrie (ZG) der Strömungskontur im Bereich des A4-Querschnitts (QS) aufweist, die der Strömungskontur der Soll-Geometrie (SG) im Bereich des A4-Querschnitts möglichst gut angenähert ist, wobei der A4-Querschnitt (QS) als Abstand von zwei benachbarten Leitschaufeln (10, 10') definiert ist, der sich zwischen einem zentralen Bereich der Saugseite (16') der Leitschaufel (10') und einem Bereich der Hinterkante (20) einer benachbarten Leitschaufel (10) erstreckt und dass die Leitschaufel (10,10') der ersten, sich direkt an die Brennkammer einer Fluggasturbine anschließenden Hochdruckturbinenstufe einer Hochdruckturbine ist.

11. Leitschaufelring einer ersten, sich direkt an die Brennkammer einer Fluggasturbine anschließenden Hochdruckturbinenstufe einer Hochdruckturbine mit mehreren Leitschaufeln (10, 10') gemäß Anspruch 10.

12. Reparatursystem zum Warten von Leitschaufeln umfassend
wenigstens eine Aufnahmeeinrichtung, die dazu eingerichtet ist, wenigstens eine zu wartende Leitschaufel (10, 10') zu halten,
wenigstens eine Messvorrichtung, die dazu eingerichtet ist, eine Ist-Geometrie der zu wartenden Leitschaufel (10, 10') berührungslos zu erfassen;
wenigstens eine automatische Bearbeitungsvorrichtung, wobei die Bearbeitungsvorrichtung eine Fräseinrichtung oder eine Schleifeinrichtung umfasst;
wenigstens eine Rechnereinheit, die dazu eingerichtet ist,
die Messvorrichtung und die Bearbeitungsvorrichtung anzusteuern,
in einem zugeordneten Speicher eine Soll-Geometrie (SG) eines entsprechenden Leitschaufeltyps zu speichern,
anhand von Optimierungsparametern und auf Grundlage des Vergleichs von Ist-Geometrie und Soll-Geometrie (SG) eine Ziel-Geometrie (ZG) zu berechnen, **dadurch gekennzeichnet, dass** die automatische Bearbeitungsvorrichtung dazu eingerichtet ist, Material (22) entlang einer Saugseite (16, 16') der Strömungskontur der zu wartenden Leitschaufel (10, 10') von einer Vorderkante (18, 18') bis zu einer Hinterkante (20, 20') aufzutragen und aufgetragenes Material (22) von einer Vorderkante (18, 18') bis zu einer Hinterkante (20, 20') abzutragen, dass
die Bearbeitungsvorrichtung derart anzusteuern, dass die Ziel-Geometrie (ZG) der zu wartenden Leitschaufel (10, 10') so wiederhergestellt wird, dass die Strömungskontur im Bereich des A4-Querschnitts (QS) der zu wartenden Leitschaufel (10, 10') der Strömungskontur der Soll-Geometrie (SG) im Bereich des A4-Querschnitts möglichst gut angenähert wird, wobei der A4-Querschnitt (QS) als Abstand von zwei benachbarten Leitschaufeln (10, 10') definiert ist, der sich zwischen einem zentralen Bereich der Saugseite (16') der zu wartenden Leitschaufel (10') und einem Bereich der Hinterkante (20) der benachbarten Leitschaufel (10) erstreckt, und dass die Leitschaufel (10,10') der ersten, sich direkt an die Brennkammer einer Fluggasturbine anschließenden Hochdruckturbinenstufe einer Hochdruckturbine ist.

## Claims

1. Repair method for guide vanes (10, 10') of a gas turbine, in particular an aircraft gas turbine, comprising the following steps:
providing at least one guide vane (10, 10') to be maintained;
detecting the actual geometry of the guide vane (10, 10') to be maintained using at least one contactless measuring method;
comparing the actual geometry of the guide vane (10, 10') detected by the contactless measurement method with a predetermined desired geometry (SG) for a corresponding guide vane type;
calculating a target geometry (ZG) for the guide vane (10, 10') to be maintained, which corresponds as far as possible to the desired geometry (SG), such that, using optimization parameters, the desired geometry (SG) of the guide vane (10, 10') to be maintained is approximated at least in portions along its flow contour;
applying material along a suction side (16, 16') of the flow contour of the guide vane (10, 10') from a leading edge (18, 18') to a trailing edge (20, 20') of the guide vane (10, 10') to be maintained and machine removal of applied material (22) along a suction side (16, 16') of the flow contour of the guide vane (10, 10') from a leading edge (18, 18') to a trailing edge (20, 20') of the guide vane (10, 10') to be maintained, such that the calculated target geometry (ZG) is produced, **characterized in that**
the target geometry (ZG) of the guide vane (10, 10') to be maintained is calculated and restored such that the flow contour in the region of the A4 cross-section (QS) of the guide vane (10, 10') to be maintained is approximated as effectively as possible to the flow contour of the desired geometry (SG) in the region of the A4 cross-section, the A4 cross-section (QS) being defined as the distance between two adjacent guide vanes (10, 10'), which extends between a central region of the suction side (16') of the guide vane (10') to be maintained to a region of the trailing edge (20) of the adjacent guide vane (10), and
**in that** the provided guide vane (10, 10') is removed from the first high-pressure turbine stage of a high-pressure turbine directly following the combustion chamber.

2. Repair method according to claim, wherein the removal of Material (22) is carried out by automated milling and/or grinding and/or by another automated machining method.

3. Repair method according to either of the preceding claims, wherein material (22) is applied by soldering, in particular diffusion soldering.

4. Repair method according to any of the preceding claims, wherein the application of material (22) is carried out depending on the detected actual geometry and on the target geometry (ZG).

5. Repair method according to any of the preceding claims, wherein, after the application of material (22) to the guide vane (10, 10'), a further calibration is carried out in order to position the guide vane (10, 10') for the removal of the material (22).

6. Repair method according to any of the preceding claims, wherein the desired geometry (SG) is an approximation of an original geometry or the original geometry of the guide vane.

7. Repair method according to claim 6, wherein the desired geometry (SG) is determined as an approximation of the original geometry by a measurement method which is carried out on a new guide vane.

8. Repair method according to claim 6, wherein the desired geometry (SG) is derived as the original geometry from design data of a guide vane or the target geometry is defined based on a new development.

9. Repair method according to any of the preceding claims, wherein the method steps are carried out repeatedly until all guide vanes (10, 10') of a guide vane ring of a turbine stage, in particular a high-pressure turbine stage, are repaired.

10. Guide vane comprising at least one repair region, **characterized in that** said repair region has been produced by the repair method according to any of the preceding claims, the guide vane having a target geometry (ZG) of the flow contour in the region of the A4 cross-section (QS) which is approximated as effectively as possible to the flow contour of the desired geometry (SG) in the region of the A4 cross-section, the A4 cross-section (QS) being defined as the distance between two adjacent guide vanes (10, 10'), which extends between a central region of the suction side (16') of the guide vane (10') and a region of the trailing edge (20) of the adjacent guide vane (10), and **in that** the guide vane (10, 10') is from the first high-pressure turbine stage of a high-pressure turbine directly following the combustion chamber of an aircraft gas turbine.

11. Guide vane ring of a first high-pressure turbine stage of a high-pressure turbine, which directly follows the combustion chamber of an aircraft gas turbine, having a plurality of guide vanes (10, 10') according to claim 10.

12. Repair system for maintaining guide vanes, comprising
at least one receiving device which is designed to hold at least one guide vane (10, 10') to be maintained,
at least one measuring device which is configured to contactlessly detect an actual geometry of the guide vane (10, 10') to be maintained;
at least one automatic processing device, the processing device comprising a milling device or a grinding device;
at least one computer unit, which is configured
to control the measuring device and the processing device,
to store a desired geometry (SG) of a corresponding guide vane type in an associated memory,
to calculate a target geometry (ZG) on the basis of optimization parameters and on the basis of the comparison of the actual geometry and the desired geometry (SG), **characterized in that** the automatic processing device is designed to apply material (22) along a suction side (16, 16') of the flow contour of the guide vane (10, 10') to be maintained from a leading edge (18, 18') to a trailing edge (20, 20') and to remove applied material (22) from a leading edge (18, 18') up to a trailing edge (20, 20') that
to control the processing device such that the target geometry (ZG) of the guide vane (10, 10') to be maintained is restored such that the flow contour in the region of the A4 cross-section (QS) of the guide vane (10, 10') to be maintained is approximated as effectively as possible to the flow contour of the desired geometry (SG) in the region of the A4 cross-section, the A4 cross-section (QS) being defined as the distance between two adjacent guide vanes (10, 10'), which extends between a central region of the suction side (16') of the guide vane (10') to be maintained and a region of the trailing edge (20) of the adjacent guide vane (10), **in that** the guide vane (10, 10') is from the first high-pressure turbine stage of a high-pressure turbine directly following the combustion chamber of an aircraft gas turbine.

## Revendications

1. Procédé de réparation pour des aubes directrices (10, 10') d'une turbine à gaz, en particulier d'une turbine à gaz d'aéronef, comprenant les étapes suivantes :
fourniture d'au moins une aube directrice (10, 10') à entretenir ;
détection de la géométrie réelle de l'aube directrice (10, 10') à entretenir à l'aide d'au moins un procédé de mesure sans contact ;
comparaison de la géométrie réelle de l'aube directrice (10, 10') détectée par le procédé de mesure sans contact avec une géométrie de consigne (SG) prédéterminée pour un type d'aube directrice correspondant ;
calcul d'une géométrie cible (ZG) pour l'aube directrice (10, 10') à entretenir, laquelle géométrie cible correspond autant que possible à la géométrie de consigne (SG), de telle sorte que, à l'aide de paramètres d'optimisation, la géométrie de consigne (SG) de l'aube directrice (10, 10') à entretenir est rapprochée au moins dans certaines sections le long de son contour d'écoulement ;
application de matériau le long d'un extrados (16, 16') du contour d'écoulement de l'aube directrice (10, 10') depuis un bord d'attaque (18, 18') jusqu'à un bord de fuite (20, 20') de l'aube directrice (10, 10') à entretenir et enlèvement par machine de matériau (22) appliqué le long d'un extrados (16, 16') du contour d'écoulement de l'aube directrice (10, 10') depuis un bord d'attaque (18, 18') jusqu'à un bord de fuite (20, 20') de l'aube directrice (10, 10') à entretenir, de telle sorte que la géométrie cible (ZG) calculée est produite, **caractérisé en ce que**
la géométrie cible (ZG) de l'aube directrice (10, 10') à entretenir est calculée et reproduite de sorte que le contour d'écoulement dans la zone de la section transversale A4 (QS) de l'aube directrice (10, 10') à entretenir est rapproché le plus possible du contour d'écoulement de la géométrie de consigne (SG) dans la zone de la section transversale A4, dans lequel la section transversale A4 (QS) est définie com me la distance entre deux aubes directrices (10, 10') adjacentes qui s'étend entre une zone centrale de l'extrados (16') de l'aube directrice (10') à entretenir et une zone du bord de fuite (20) de l'aube directrice (10) adjacente, et
**en ce que** l'aube directrice (10, 10') fournie est prélevée du premier étage de turbine haute pression d'une turbine haute pression, lequel se raccorde directement à la chambre de combustion.

2. Procédé de réparation selon la revendication, dans lequel l'enlèvement de matériau (22) est réalisé par fraisage ou/et meulage automatisés ou/et par un autre procédé d'usinage par enlèvement de copeaux automatisé.

3. Procédé de réparation selon l'une des revendications précédentes, dans lequel l'application de matériau (22) est effectuée par brasage, en particulier par brasage par diffusion.

4. Procédé de réparation selon l'une des revendications précédentes, dans lequel l'application de matériau (22) est réalisée en fonction de la géométrie réelle détectée et de la géométrie cible (ZG).

5. Procédé de réparation selon l'une des revendications précédentes, dans lequel, après l'application de matériau (22) sur l'aube directrice (10, 10'), un autre mesurage est réalisé pour positionner l'aube directrice (10, 10') pour l'enlèvement du matériau (22).

6. Procédé de réparation selon l'une des revendications précédentes, dans lequel la géométrie de consigne (SG) est un rapprochement d'une géométrie d'origine ou la géométrie d'origine de l'aube directrice.

7. Procédé de réparation selon la revendication 6, dans lequel la géométrie de consigne (SG) est déterminée comme rapprochement de la géométrie d'origine par un procédé de mesure qui est réalisé sur une aube directrice à l'état neuf.

8. Procédé de réparation selon la revendication 6, dans lequel la géométrie de consigne (SG) est dérivée com me géométrie d'origine à partir de données de construction d'une aube directrice ou la géométrie de consigne est définie sur la base d'un nouveau développement.

9. Procédé de réparation selon l'une des revendications précédentes, dans lequel les étapes de procédé sont réalisées de manière répétée jusqu'à ce que toutes les aubes directrices (10, 10') d'une couronne d'aubes directrices d'un étage de turbine, en particulier d'un étage de turbine haute pression, soient réparées.

10. Aube directrice comprenant au moins une zone de réparation, **caractérisée en ce que** ladite zone de réparation a été produite par le procédé de réparation selon l'une des revendications précédentes, dans laquelle l'aube directrice présente une géométrie cible (ZG) du contour d'écoulement dans la zone de la section transversale A4 (QS), laquelle géométrie cible est rapprochée le plus possible du contour d'écoulement de la géométrie de consigne (SG) dans la zone de la section transversale A4, dans laquelle la section transversale A4 (QS) est définie comme la distance entre deux aubes directrices (10, 10') adjacentes qui s'étend entre une zone centrale de l'extrados (16') de l'aube directrice (10') et une zone du bord de fuite (20) d'une aube directrice (10) adjacente, **et en ce que** l'aube directrice (10,10') est le premier étage de turbine haute pression d'une turbine haute pression, lequel se raccorde directement à la chambre de combustion d'une turbine à gaz d'aéronef.

11. Couronne d'aubes directrices d'un premier étage de turbine haute pression d'une turbine haute pression, lequel se raccorde directement à la chambre de combustion d'une turbine à gaz d'aéronef, comportant plusieurs aubes directrices (10, 10') selon la revendication 10.

12. Système de réparation pour l'entretien d'aubes directrices comprenant
au moins un appareil de réception qui est conçu pour maintenir au moins une aube directrice (10, 10') à entretenir,
au moins un dispositif de mesure qui est configuré pour détecter sans contact une géométrie réelle de l'aube directrice (10, 10') à entretenir ;
au moins un dispositif de traitement automatique, dans lequel le dispositif de traitement comprend un appareil de fraisage ou un appareil de meulage ;
au moins une unité informatique qui est configurée pour
commander le dispositif de mesure et le dispositif de traitement,
mémoriser dans une mémoire associée une géométrie de consigne (SG) d'un type d'aube directrice correspondant,
calculer une géométrie cible (ZG) sur la base de paramètres d'optimisation et sur la base de la comparaison de la géométrie réelle et de la géométrie de consigne (SG), **caractérisé en ce que** le dispositif de traitement automatique est conçu pour appliquer du matériau (22) le long d'un extrados (16, 16') du contour d'écoulement de l'aube directrice (10, 10') à entretenir depuis un bord d'attaque (18, 18') jusqu'à un bord de fuite (20, 20') et pour enlever du matériau (22) appliqué depuis un bord d'attaque (18, 18') jusqu'à un bord de fuite (20, 20'), **en ce que**
commander le dispositif de traitement de telle sorte que la géométrie cible (ZG) de l'aube directrice (10, 10') à entretenir est reproduite de sorte que le contour d'écoulement dans la zone de la section transversale A4 (QS) de l'aube directrice (10, 10') à entretenir est rapproché le plus possible du contour d'écoulement de la géométrie de consigne (SG) dans la zone de la section transversale A4, dans lequel la section transversale A4 (QS) est définie comme la distance entre deux aubes directrices (10, 10') adjacentes qui s'étend entre une zone centrale de l'extrados (16') de l'aube directrice (10') à entretenir et une zone du bord de fuite (20) de l'aube directrice (10) adjacente, **et en ce que** l'aube directrice (10,10') est le premier étage de turbine haute pression d'une turbine haute pression, lequel se raccorde directement à la chambre de combustion d'une turbine à gaz d'aéronef.
